# EUROPEAN PATENT SPECIFICATION

(11) **EP 3 495 172 B1**
(45) Date of publication and mention of the grant of the patent: **19.08.2020**
(21) Application number: 18156543.3
(22) Date of filing: 13.02.2018
(51) Int. Cl.: B60C 29/00, B60C 29/02

(54) **TIRE AIR VALVE STEM**
REIFENLUFTVENTILSCHAFT
TIGE DE SOUPAPE D'AIR DE PNEUMATIQUE

(30) Priority: 08.12.2017 TW 106218309 U
(43) Date of publication of application: 12.06.2019
(73) Proprietor: Rim Master Industrial Co., Ltd., Tainan City (TW)
(72) Inventor: CHANG, I-Huang, Tainan City (TW)
(74) Representative: Ehrner & Delmar Patentbyrå AB

(56) References cited:
- BE-A- 470 139
- GB-A- 1 512 760
- TW-U- M 355 175

## Description

### BACKGROUND OF THE INVENTION

### 1. Field of the Invention

The invention relates to a pipe, and more particularly to a tire air valve pipe of a wheel valve stem.

### 2. Description of Related Art

A conventional wheel valve stem has an air valve pipe and an air core assembly. The air core assembly is mounted at a top end of the air valve pipe. The air core assembly can open or close the wheel valve stem. When the wheel valve stem is in use, the air valve pipe is mounted in a wheel frame. When a tire has an inner tube, a cushion body of the air valve pipe is stuck to the inner tube of the tire in an airtight manner. When a tire is a tubeless tire, a cushion body of the air valve pipe is combined with the wheel frame.

The air valve pipe must have mechanical strength and be air-tight. A conventional air valve pipe has a main body and a cushion body. The main body is made of metal, and the cushion body is made of rubber. The air-tight effect would be affected after the wheel valve stem is operated for a while.

On the other hand, the strength of the cushion body is not sufficient, and the rubber material would be ageing. Therefore, the connection strength between the cushion body and the wheel frame is not sufficient, and the cushion body would be damaged due to the vibration of the wheel. It is difficult to ensure the stability and airtightness between the air valve pipe and the wheel frame. The valve pipe is easily detached from the wheel frame.

In addition, GB 1 512 760 A discloses a valve for a tire inner tube including a tubular insert adapted to accommodate a valve core, a resilient base adapted to be bonded to the inner tube and having a bore for receiving a portion of the tubular insert, and a hard radially expandable member integral with the base around a portion of the bore, which member causes the resilient base to grip projections on the surface of the insert to retain the insert in base.

Moreover, TW M355175 U discloses an assembled tire air-tap including a nozzle holder and a valve stem. The valve stem is inserted in the nozzle holder in an air tight manner. The nozzle holder has a seat and a tube. The seat has a screwing member, a fixing portion disposed at a bottom end of the screwing member, a sealing ring disposed on an upper portion of the screwing member, and a through hole. The tube has a passing hole and a screwing portion disposed on a lower portion of a wall surrounding the passing hole. The screwing member of the seat is screwed to the screwing portion of the tube.

To overcome the shortcomings of the conventional air valve pipes, the present invention provides a tire air valve pipe to mitigate or obviate the aforementioned problems.

### SUMMARY OF THE INVENTION

The main objective of the present invention is to provide a tire air valve pipe that can enhance the strength and airtightness of the connection with a wheel frame.

The tire air valve pipe has a cushion body, an inner airtight ring, a fastening element, a main body, and an outer airtight ring. The inner airtight ring is mounted in an inner recess section of a base portion of the cushion body, and abuts a bearing portion of a fixing hole of the cushion body. The fastening element is screwed and fixed with the cushion body. The main body is made of metal and is combined with the fastening element. The outer airtight ring is located above the cushion body and the fastening element.

Other objects, advantages, and novel features of the invention will become more apparent from the following detailed description when taken in conjunction with the accompanying drawings.

### BRIEF DESCRIPTION OF THE DRAWINGS

Fig. 1 is a side view in partial section of a first embodiment of a tire air valve pipe in accordance with the present invention;
Fig.2 is an enlarged cross sectional side view of the cushion body, the inner air tight ring and the fastening element of the tire air valve pipe in Fig.1;
Fig.3 is a cross sectional side view of another embodiment of the cushion body of the tire air valve pipe in Fig. 1;
Fig.4 is an enlarged cross sectional side view of an adhesive between the cushion body and the connecting section of the fastening element of the tire air valve pipe in Fig. 1;
Fig. 5 is an operational side view in partial section of the tire air valve pipe in Fig. 1 mounted on an inner tube and a wheel frame;

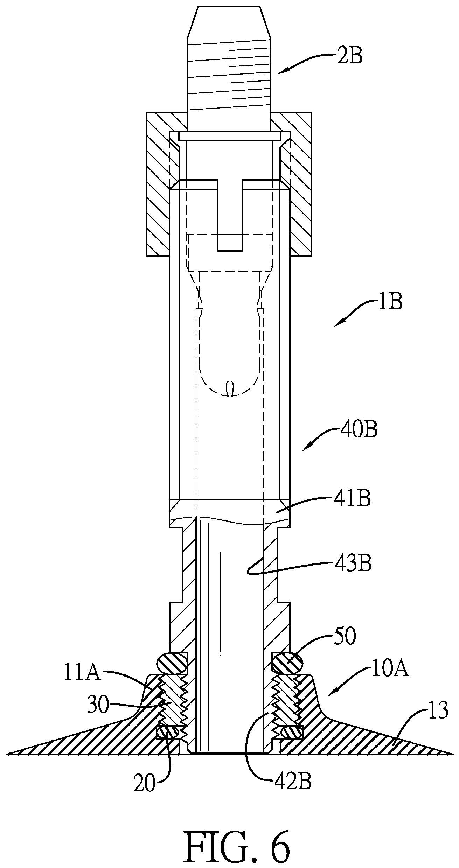

Fig. 6 is a side view in partial section of a second embodiment of the tire air valve pipe in accordance with the present invention;

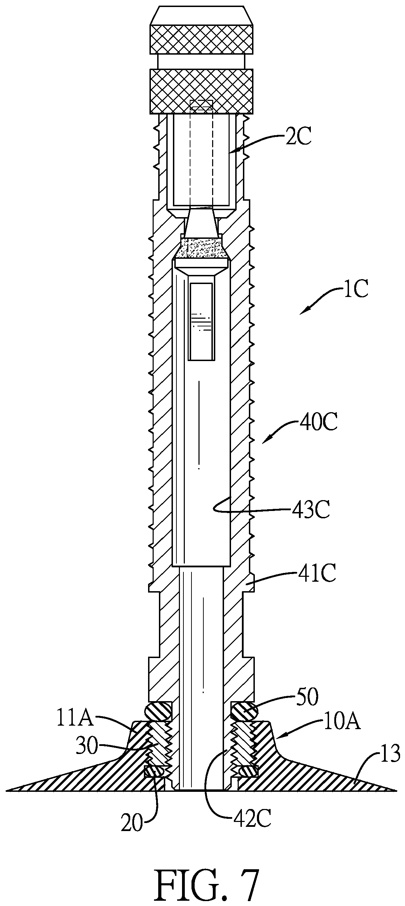

Fig. 7 is a side view in partial section of a third embodiment of a tire air valve pipe in accordance with the present invention;

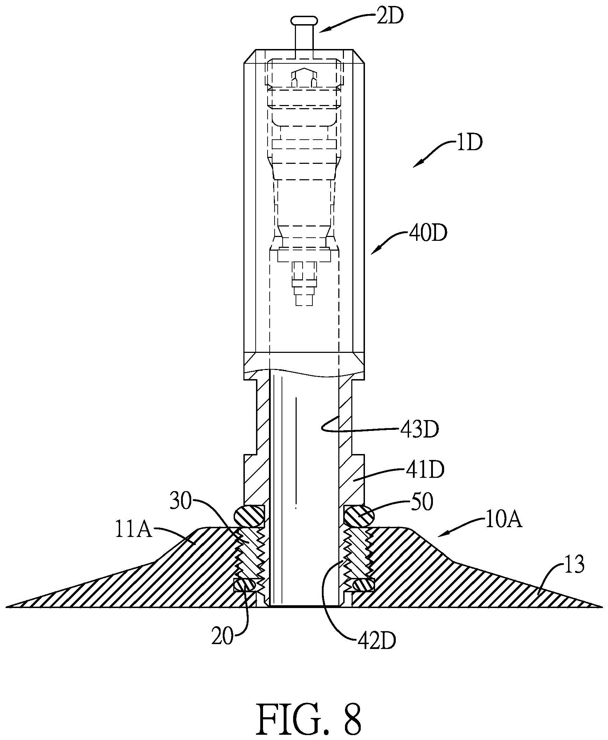

Fig. 8 is a side view in partial section of a fourth embodiment of a tire air valve pipe in accordance with the present invention;
Fig. 9 is a side view in partial section of a fifth embodiment of a tire air valve pipe in accordance with the present invention; and
Fig. 10 is an operational side view in partial section of the tire air valve pipe in Fig. 9, mounted on a tubeless tire and a wheel frame.

### DETAILED DESCRIPTION OF PREFERRED EMBODIMENT

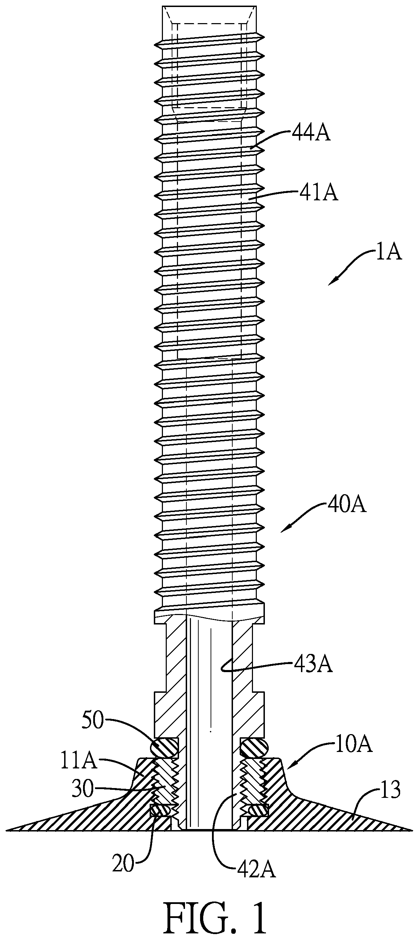

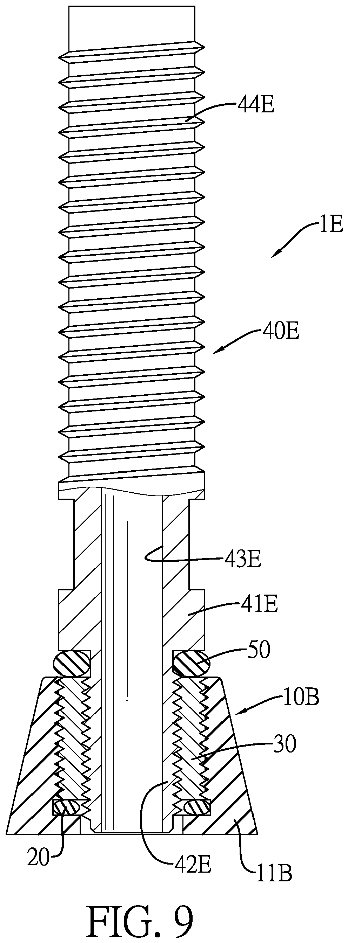

With reference to Figs. 1 and 9, a tire air valve pipe 1A, 1B in accordance with the present invention comprises a cushion body 10A, 10B, an inner airtight ring 20, a fastening element 30, a main body 40, and an outer airtight ring 50.

With reference to Fig. 1, 2 and 9, the cushion body 10A, 10B is made of Thermoplastic Urethane (TPU) and has a base portion 11A, 11B and a fixing hole 12. The fixing hole 12 is formed through the base portion 11A, 11B axially. The fixing hole 12 has a top portion, a bottom portion, a threaded section 121, a bottom recess section 122, and an inner recess section 123. The threaded section 121 is formed at the top portion of the fixing hole 12. The bottom recess section 122 is formed at the bottom portion of the fixing hole 12. The inner recess section 123 is located between the threaded section 121 and the bottom recess section 122 and communicates with the threaded section 121 and the bottom recess section 122. A diameter of the threaded section 121 may be equal to or different from a diameter of the bottom recess section 122. A diameter of the inner recess section 123 is larger than the diameter of the bottom recess section 122. A bearing portion 124 is formed at a bottom rim of the inner recess section 123, and the bearing portion 124 is annular. Preferably, the diameter of the inner recess section 123 is larger than the diameter of the threaded section 121.

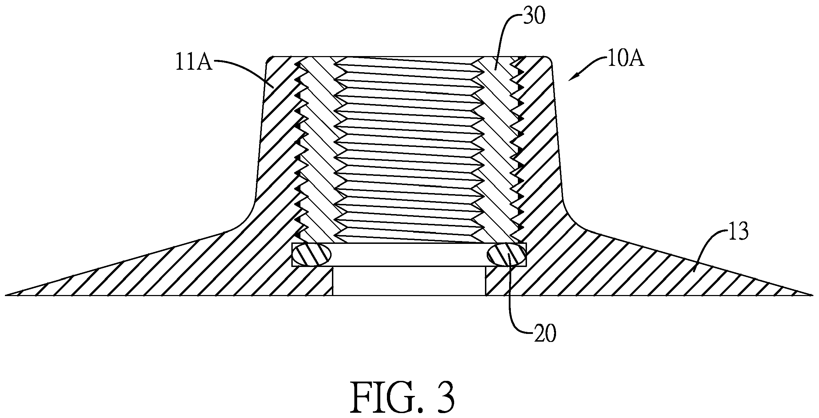

With reference to Figs. 1, 2, and 9, preferably, the outer circumferential surface of the base portion 11A, 11B may be a conical surface. The length of the cushion body 10A, 10B is changeable and depends on the operating circumstance of the tire air valve pipe 1A, 1E. With reference to Fig. 3, when the cushion body 10A is elongated, the length of the threaded section 121 is relatively longer.

With reference to Figs. 1, 2, and 9, the inner air tight ring 20 is compressible, such as rubber. The inner air tight ring 20 is mounted in the inner recess section 123 of the base portion 11A, and abuts the bearing portion 124.

With reference to Figs. 1, 2, and 9, the fastening element 30 is a cylindrical block and is made of metal. The fastening element 30 is screwed and fixed with the cushion body 10A, 10B. The fastening element 30 has a connecting portion 31 and a fastening threaded hole 32. The connecting portion 31 is formed on an outer circumferential surface of the fastening element 30, and has an external thread. The fastening threaded hole 32 is formed through the fastening element 30 axially. That is, the fastening element 30 is screwed with the threaded section 121 of the cushion body 10A, 10B, and the external thread of the connecting section 31 is screwed with the internal thread of the threaded section 121. A bottom portion of the fastening element 30 is mounted in the inner recess section 123 and abuts the inner air tight ring 20, and this forms an airtight state between the fastening element 30 and the cushion body 10A, 10B with the inner air tight ring 20.

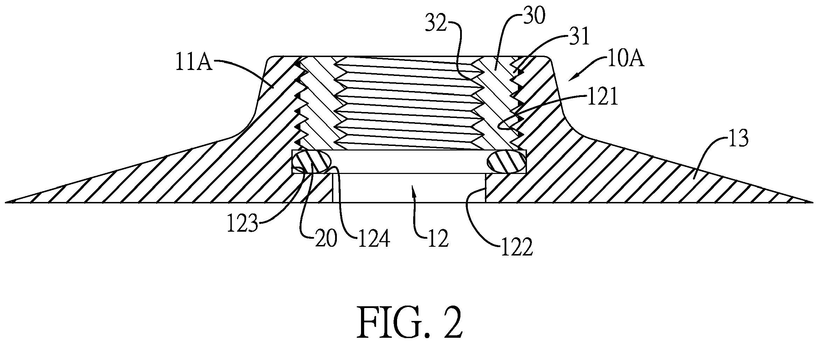

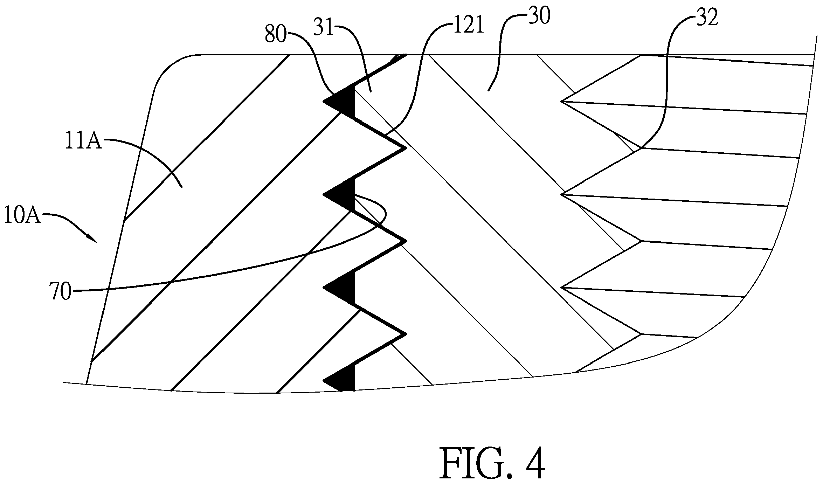

With reference to Figs. 2 and 4, an adhesive 80 may be further disposed between the internal thread of the threaded section 121 and the external thread of the connecting section 31 of the fastening element 30. By means of the adhesive 80, an adhesive interface is formed between the internal thread of the threaded section 121 of the cushion body 10A and the external thread of the connecting section 31 of the fastening element 30 to improve the fastening force and airtightness between the fastening element 30 and the cushion body 10A and to enhance the anti-loosening performance. Preferably, the adhesive 80 is a high-viscosity adhesive.

With reference to Fig. 1, 2 and 4, the internal thread of the threaded section 121 of the base portion 11A is a triangular thread. The external thread of the connecting section 31 of the fastening element 30 is a triangular thread and is screwed with the threaded section 121. The thread of the connecting section 31 of the fastening element 30 is further machined to remove a tip portion and forms a trapezoidal thread. A filling gap 70 is formed between the triangular thread of the threaded section 121 and the trapezoidal thread of the connecting section 31 of the fastening element 30. The filling gap 70 is filled with the adhesive 80, so that a bonding interface is formed between the threaded section 121 of the base portion 11A, 11B and the fastening element 30, and the adhesive 80 achieves an enhanced airtight effect and bonding strength.

With reference to Figs. 1, 2, and 9, the main body 40A, 40E is made of metal and is combined with the fastening element 30. The maim body 40A, 40E has a tube portion 41A, 41E, a connecting end portion 42A, 42E, and a through hole 43A, 43E. The connecting end portion 42A, 42E protrudes from a bottom end of the tube portion 41A. The through hole 43A, 43E is formed through the tube portion 41A, 41E and the connecting end portion 42A, 42E. A threaded portion 44A, 44E is formed on an outer circumferential surface of the tube portion 41A, 41E. A diameter of the connecting end portion 42A, 42E is smaller than a diameter of the tube portion 41A, 41E. An external thread is formed on an outer circumferential surface of the connecting end portion 42A, 42E. The main body 40A, 40E is screwed with the fastening threaded hole 32 of the fastening element 30 by the connecting end portion 42A, 42E.

With reference to Figs. 1, 2, and 9, the outer airtight ring 50 is located above the cushion body 10A, 10E and the fastening element 30. The outer airtight ring 50 is mounted around the connecting end portion 42A, 42E of the main body 40A, 40E. The outer airtight ring 50 is clamped between a bottom portion of the tube portion 41A, 41E and a top portion of the fastening element 30. The main body 40A, 40E and the fastening element 30 are hermetically sealed by the compressed outer airtight ring 50.

With reference to Figs. 1, 5, and 10, the shape of the cushion body and the main body can be changed according to the specifications and forms of the existing tire valves. For the tire air valve pipe 1A, 1B, 1C, 1D, 1E, the tube portion 41A, 41B, 41C, 41D,41E of the main body 40A, 40B, 40C, 40D,40E, the connecting end portion 42A, 42B, 42C, 42D,42E, and the through hole 43A, 43B, 43C, 43D,43E can meet the specifications of the wheel valve stem, and can be combined with corresponding air core assembly 2A, 2B, 2C, 2D, 2E.

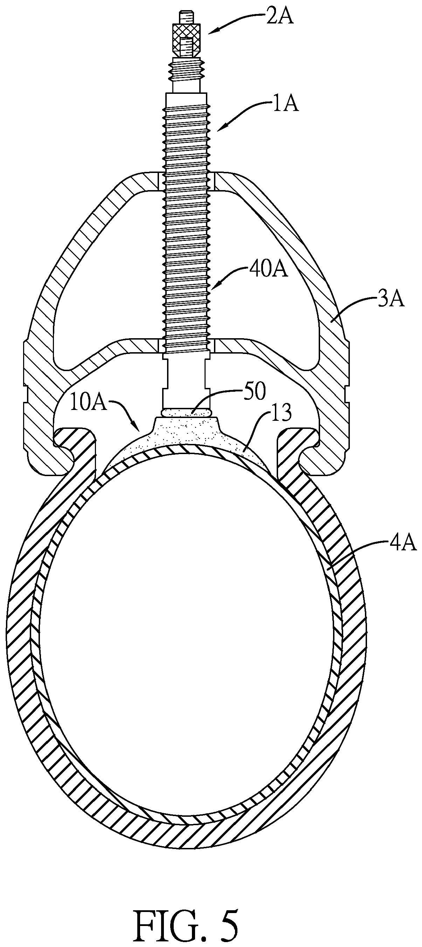

When the tire air valve pipe 1A is a tube-type tire valve structure, taking the tire air valve pipe 1A shown in FIG. 1 as an example, a connecting portion 13 is formed at a bottom portion of the base portion 11A of the cushion body 10A. With reference to Figs. 1 and 5, the tire air valve pipe 1A is stuck on the inner tube 4A by the connecting portion 13, and this makes the through hole 43A of the main body 40A communicate with the inner tube 4A via the fastening threaded hole 32 and the fixing hole 12. With reference to Fig. 4, the tire air valve pipe 1A is mounted through the wheel frame 3A, or, the main body 40A is fastened with a nut in the wheel frame 3A, and the air core assembly 2A is installed at the top of the main body 40A to form a tire valve, thereby allowing the user to use an inflating device to inflate the inner tube 4A.

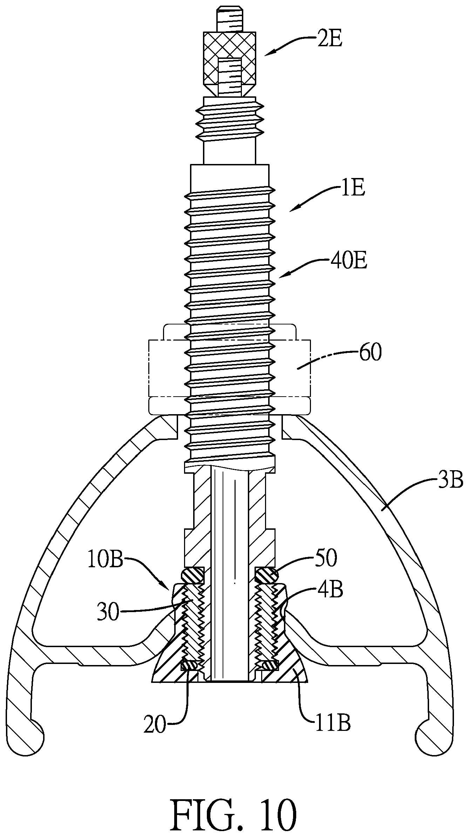

With reference to Fig. 10, when the tire air valve pipe 1E is a component in a tubeless tire valve structure, the tire air valve pipe 1A is mounted through the wheel frame 3B, and is fastened with a nut 60. The cushion body 10B of the tire air valve pipe 1E would be deformed and seal the air valve mounting hole 4B of the wheel frame 3B by the fastening relationship between the nut 60 and the main body 40. Then mount the air core assembly 2 on the top portion of the main body 40 to form a tire valve stem. In this way, the user can inflate the tubeless tire.

The tire air valve pipe is made of thermoplastic polyurethane (TPU), which has low cost and light weight in the production and processing, and can effectively reduce the production and processing cost, and achieve the effect of lightweight. On the other hand, the cushion body 10A, 10B made of thermoplastic polyurethane (TPU) has a sufficient strength, and the cushion body 10A, 10B can be screwed with the fastening element 30. The cushion body 10A, 10B is not easy to be damaged by the vibration of the wheel frame or the tire, to ensure the stability and the airtightness between the connections of the wheel frame or the tire. The tire air valve pipe and the wheel frame are not easy to loosen, and can reduce the noise of the wheel rotation.

## Claims

1. A tire air valve pipe comprising:
a cushion body (10A, 10B) having
a base portion (11A, 11B) and
a fixing hole (12) formed through the base portion (11A, 11B) axially, the fixing hole having a top portion, a bottom portion and a bottom recess section (122) formed at the bottom portion of the fixing hole (12);
a fastening element (30);
a main body (40A, 40B, 40C, 40D, 40E) combined with the fastening element (30), the main body (40A, 40B, 40C, 40D, 40E) having
a tube portion (41A, 41B, 41C, 41D, 41E),
a connecting end portion (42A, 42B, 42C, 42D, 42E) protruding from a bottom end of the tube portion (41A, 41B, 41C, 41D, 41E), and
a through hole (43A, 43B, 43C, 43D, 43E) through the tube portion (41A, 41B, 41C, 41D, 41E),
wherein a threaded portion (44A, 44B, 44C, 44D, 44E) is formed on an outer circumferential surface of the tube portion (41A, 41B, 41C, 41D, 41E), a diameter of the connecting end portion (42A, 42B, 42C, 42D, 42E) is smaller than a diameter of the tube portion (41A, 41B, 41C, 41D, 41E), an external thread is formed on an outer circumferential surface of the connecting end portion (42A, 42B, 42C, 42D, 42E), and the main body (40A, 40B, 40C, 40D,
40E) is screwed with the fastening element (30) by the connecting end portion (42A, 42B, 42C, 42D, 42E);
the tire air valve pipe being **characterized in that**:
the fixing hole (12) of the cushion body (10A, 10B) has
a threaded section (121) formed at the top portion of the fixing hole (12) and having an internal thread,
an inner recess section (123) located between the threaded section (121) and the bottom recess section (122) and communicating with the threaded section (121) and the bottom recess section (122), and
a bearing portion (124) formed at a bottom rim of the inner recess section (123);
the tire air valve pipe has an inner airtight ring (20) mounted in the inner recess section (123) of the base portion (11A), and abutting the bearing portion (124);
the fastening element (30) is screwed and fixed with the threaded section (121) of the cushion body (10A, 10B), extends into the inner recess section (123), abuts the inner airtight ring (20), and has
a connecting portion (31) formed on an outer circumferential surface of the fastening element (30) and having an external thread screwed with the internal thread of the threaded section (121), and
a fastening threaded hole (32) formed through the fastening element (30) axially, wherein the main body (40A, 40B, 40C, 40D, 40E) is screwed with the fastening threaded hole (32) of the fastening element (30) by the connecting end portion (42A, 42B, 42C, 42D, 42E); and
the tire air valve pipe has an outer airtight ring (50) located above the cushion body (10A, 10E) and the fastening element (30), and clamped between a bottom portion of the tube portion (41A, 41B, 41C, 41D, 41E) and a top portion of the fastening element (30), wherein the main body (40A, 40B, 40C, 40D, 40E) and the fastening element (30) are hermetically sealed by the outer airtight ring (50).

2. The tire air valve pipe as claimed in claim 1, wherein an adhesive (80) is disposed between the internal thread of the threaded section (121) and the external thread of the connecting section (31) of the fastening element (30).

3. The tire air valve pipe as claimed in claim 2, wherein the internal thread of the threaded section (121) of the base portion (11A,11B) is a triangular thread, the external thread of the connecting section (31) of the fastening element (30) is a trapezoidal thread, a filling gap (70) is formed between the triangular thread of the threaded section and the trapezoidal thread of the connecting section (31) of the fastening element (30), and the filling gap (70) is filled with the adhesive (80).

4. The tire air valve pipe as claimed in any one of claims 1 to 3, wherein the cushion body (10A, 10B) is made of Thermoplastic Urethane, and the fastening element (30) and the main body (40A, 40B, 40C, 40D, 40E) are made of metal.

5. The tire air valve pipe as claimed in claim 4, wherein an outer circumferential surface of the base portion (11A, 11B) is a conical surface.

6. The tire air valve pipe as claimed in claim 4, wherein a connecting portion (13) is formed at a bottom portion of the base portion (11A) of the cushion body (10A).

7. The tire air valve pipe as claimed in claim 6, wherein an outer circumferential surface of the base portion (11A, 11B) is a conic surface.

## Patentansprüche

1. Reifenluftventilrohr, umfassend:
einen Kissenkörper (10A, 10B) mit
einem Basisteil (11A, 11B) und
einem axial durch den Basisteil (11A, 11B) ausgebildeten Fixierloch (12), wobei das Fixierloch einen oberen Teil, einen unteren Teil und einen unteren Aussparungsabschnitt (122), der an dem unteren Teil des Fixierlochs (12) ausgebildet ist, aufweist;
ein Befestigungselement (30);
einen Hauptkörper (40A, 40B, 40C, 40D, 40E), der mit dem Befestigungselement (30) kombiniert ist, wobei der Hauptkörper (40A, 40B, 40C, 40D, 40E)
einen Röhrenteil (41A, 41B, 41C, 41D, 41E),
einen Verbindungsendteil (42A, 42B, 42C, 42D, 42E), der von einem unteren Ende des Röhrenteils (41A, 41B, 41C, 41D, 41E) vorragt, und
ein Durchgangsloch (43A, 43B, 43C, 43D, 43E) durch den Röhrenteil (41A, 41B, 41C, 41D, 41E) aufweist,
wobei ein Gewindeteil (44A, 44B, 44C, 44D, 44E) an einer Außenumfangsfläche des Röhrenteils (41A, 41B, 41C, 41D, 41E) ausgebildet ist, ein Durchmesser des Verbindungsendteils (42A, 42B, 42C, 42D, 42E) kleiner als ein Durchmesser des Röhrenteils (41A, 41B, 41C, 41D, 41E) ist, ein Außengewinde auf einer Außenumfangsfläche des Verbindungsendteils (42A, 42B, 42C, 42D, 42E) ausgebildet ist und der Hauptkörper (40A, 40B, 40C, 40D, 40E) durch den Verbindungsendteil (42A, 42B, 42C, 42D, 42E) mit dem Befestigungselement (30) verschraubt ist;
wobei das Reifenluftventilrohr **dadurch gekennzeichnet ist, dass**:
das Fixierloch (12) des Kissenkörpers (10A, 10B) Folgendes aufweist:
einen Gewindeabschnitt (121), der am oberen Teil des Fixierlochs (12) ausgebildet ist und ein Innengewinde aufweist,
einen inneren Aussparungsabschnitt (123), der zwischen dem Gewindeabschnitt (121) und dem unteren Aussparungsabschnitt (122) positioniert ist und mit dem Gewindeabschnitt (121) und dem unteren Aussparungsabschnitt (122) in Verbindung steht, und
einen Lagerteil (124), der an einem unteren Rand des inneren Aussparungsabschnitts (123) ausgebildet ist;
das Reifenluftventilrohr einen inneren luftdichten Ring (20) aufweist, der in dem inneren Aussparungsabschnitt (123) des Basisteils (11A) angebracht ist und an dem Lagerteil (124) anliegt;
das Befestigungselement (30) mit dem Gewindeabschnitt (121) des Kissenkörpers (10A, 10B) verschraubt und befestigt ist, sich in den inneren Aussparungsabschnitt (123), an dem inneren luftdichten Ring (20) anliegt und Folgendes aufweist:
einen Verbindungsteil (31), der an einer Außenumfangsfläche des Befestigungselements (30) ausgebildet ist und ein Außengewinde aufweist, das mit dem Innengewinde des Gewindeabschnitts (121) verschraubt ist, und
ein Befestigungsgewindeloch (32), das axial durch das Befestigungselement (30) ausgebildet ist, wobei der Hauptkörper (40A, 40B, 40C, 40D, 40E) durch den Verbindungsendteil (42A, 42B, 42C, 42D, 42E) mit dem Befestigungsgewindeloch (32) des Befestigungselements (30) verschraubt ist; und
das Reifenluftventilrohr einen äußeren luftdichten Ring (50) aufweist, der über dem Kissenkörper (10A, 10E) und dem Befestigungselement (30) positioniert ist und zwischen einem unteren Teil des Röhrenteils (41A, 41B, 41C, 41D, 41E) und einem oberen Teil des Befestigungselements (30) eingeklemmt ist, wobei der Hauptkörper (40A, 40B, 40C, 40D, 40E) und das Befestigungselement (30) durch den äußeren luftdichten Ring (50) hermetisch abgedichtet werden.

2. Reifenluftventilrohr nach Anspruch 1, wobei ein Klebstoff (80) zwischen dem Innengewinde des Gewindeabschnitts (121) und dem Außengewinde des Verbindungsabschnitts (31) des Befestigungselements (30) angeordnet ist.

3. Reifenluftventilrohr nach Anspruch 2, wobei das Innengewinde des Gewindeabschnitts (121) des Basisteils (11A, 11B) ein Dreiecksgewinde ist, das Außengewinde des Verbindungsabschnitts (31) des Befestigungselements (30) ein Trapezgewinde ist, zwischen dem Dreiecksgewinde des Gewindeabschnitts und dem Trapezgewinde des Verbindungsabschnitts (31) des Befestigungselements (30) ein Füllspalt (70) ausgebildet ist und der Füllspalt (70) mit dem Klebstoff (80) gefüllt ist.

4. Reifenluftventilrohr nach einem der Ansprüche 1 bis 3, wobei der Kissenkörper (10A, 10B) aus thermoplastischem Urethan hergestellt ist und das Befestigungselement (30) und der Hauptkörper (40A, 40B, 40C, 40D, 40E) aus Metall hergestellt sind.

5. Reifenluftventilrohr nach Anspruch 4, wobei eine Außenumfangsfläche des Basisteils (11A, 11B) eine konische Fläche ist.

6. Reifenluftventilrohr nach Anspruch 4, wobei ein Verbindungsteil (13) an einem unteren Teil des Basisteils (11A) des Kissenkörpers (10A) ausgebildet ist.

7. Reifenluftventilrohr nach Anspruch 6, wobei eine Außenumfangsfläche des Basisteils (11A, 11B) eine konische Fläche ist.

## Revendications

1. Tuyau de valve à air pour pneumatique, comprenant :
un corps d'amortissement (10A, 10B) ayant une portion de base (11A, 11B) et
un trou de fixation (12) formé axialement à travers la portion de base (11A, 11B), le trou de fixation ayant une portion supérieure, une portion inférieure et une section en retrait inférieure (122) formée au niveau de la portion inférieure du trou de fixation (12) ;
un élément d'attache (30) ;
un corps principal (40A, 40B, 40C, 40D, 40E) combiné à l'élément d'attache (30), le corps principal (40A, 40B, 40C, 40D, 40E) ayant une portion de tube (41A, 41B, 41C, 41D, 41E),
une portion d'extrémité de connexion (42A, 42B, 42C, 42D, 42E) faisant saillie depuis une extrémité inférieure de la portion de tube (41A, 41B, 41C, 41D, 41E), et
un trou traversant (43A, 43B, 43C, 43D, 43E) à travers la portion de tube (41A, 41B, 41C, 41D, 41E),
une portion filetée (44A, 44B, 44C, 44D, 44E) étant formée sur une surface circonférentielle extérieure de la portion de tube (41A, 41B, 41C, 41D, 41E), un diamètre de la portion d'extrémité de connexion (42A, 42B, 42C, 42D, 42E) étant inférieur à un diamètre de la portion de tube (41A, 41B, 41C, 41D, 41E), un filetage extérieur étant formé sur une surface circonférentielle extérieure de la portion d'extrémité de connexion (42A, 42B, 42C, 42D, 42E), et le corps principal (40A, 40B, 40C, 40D, 40E) étant vissé à l'élément d'attache (30) par la portion d'extrémité de connexion (42A, 42B, 42C, 42D, 42E) ;
le tuyau de valve à air pour pneumatique étant **caractérisé en ce que** :
le trou de fixation (12) du corps d'amortissement (10A, 10B) présente
une section filetée (121) formée au niveau de la portion supérieure du trou de fixation (12) et ayant un filetage intérieur,
une section en retrait intérieure (123) située entre la section filetée (121) et la section en retrait inférieure (122) et communiquant avec la section filetée (121) et la section en retrait inférieure (122), et
une portion de palier (124) formée au niveau d'un bord inférieur de la section en retrait intérieure (123) ;
le tuyau de valve à air pour pneumatique présente une bague intérieure étanche à l'air (20) montée dans la section en retrait intérieure (123) de la portion de base (11A), et en butée contre la portion de palier (124) ;
l'élément d'attache (30) est vissé et fixé à la section filetée (121) du corps d'amortissement (10A, 10B), s'étend dans la section en retrait intérieure (123), bute contre la bague intérieure étanche à l'air (20), et présente
une portion de connexion (31) formée sur une surface circonférentielle extérieure de l'élément d'attache (30) et ayant un filetage extérieur vissé avec le filetage intérieur de la section filetée (121), et
un trou fileté d'attache (32) formé axialement à travers l'élément d'attache (30), le corps principal (40A, 40B, 40C, 40D, 40E) étant vissé avec le trou fileté d'attache (32) de l'élément d'attache (30) par la portion d'extrémité de connexion (42A, 42B, 42C, 42D, 42E) ; et
le tuyau de valve à air pour pneumatique présente une bague extérieure étanche à l'air (50) située au-dessus du corps d'amortissement (10A, 10E) et de l'élément d'attache (30), et serrée entre une portion inférieure de la portion de tube (41A, 41B, 41C, 41D, 41E) et une portion supérieure de l'élément d'attache (30), le corps principal (40A, 40B, 40C, 40D, 40E) et l'élément d'attache (30) étant scellés hermétiquement par la bague extérieure étanche à l'air (50).

2. Tuyau de valve à air pour pneumatique selon la revendication 1, dans lequel un adhésif (80) est disposé entre le filetage intérieur de la section filetée (121) et le filetage extérieur de la section de connexion (31) de l'élément d'attache (30) .

3. Tuyau de valve à air pour pneumatique selon la revendication 2, dans lequel le filetage intérieur de la section filetée (121) de la portion de base (11A, 11B) est un filetage triangulaire, le filetage extérieur de la section de connexion (31) de l'élément d'attache (30) est un filetage trapézoïdal, un espace de remplissage (70) est formé entre le filetage triangulaire de la section filetée et le filetage trapézoïdal de la section de connexion (31) de l'élément d'attache (30), et l'espace de remplissage (70) est rempli avec l'adhésif (80).

4. Tuyau de valve à air pour pneumatique selon l'une quelconque des revendications 1 à 3, dans lequel le corps d'amortissement (10A, 10B) est fabriqué en uréthane thermoplastique et l'élément d'attache (30) et le corps principal (40A, 40B, 40C, 40D, 40E) sont fabriqués en métal.

5. Tuyau de valve à air pour pneumatique selon la revendication 4, dans lequel une surface circonférentielle extérieure de la portion de base (11A, 11B) est une surface conique.

6. Tuyau de valve à air pour pneumatique selon la revendication 4, dans lequel une portion de connexion (13) est formée au niveau d'une portion inférieure de la portion de base (11A) du corps d'amortissement (10A).

7. Tuyau de valve à air pour pneumatique selon la revendication 6, dans lequel une surface circonférentielle extérieure de la portion de base (11A, 11B) est une surface conique.
